**Europäisches Patentamt**

**European Patent Office**

**Office européen des brevets**

(19)

(11) Numéro de publication: **0 013 655**
**B1**

(12) **FASCICULE DE BREVET EUROPEEN**

(45) Date de publication du fascicule du brevet:
**25.01.84**

(51) Int. Cl.³: **H 02 G 7/05**, H 01 R 4/10

(21) Numéro de dépôt: **80420004.6**

(22) Date de dépôt: **09.01.80**

(54) Manchon d'ancrage pour conducteur électrique nu et organe de déformation pour assurer sa liaison par étirage avec un conducteur électrique nu.

(30) Priorité: **10.01.79 FR 7901039**
**11.06.79 FR 7915326**

(73) Titulaire: **Etablissements Dervaux Société anonyme:, 71 rue de Monceau, F-75008 Paris-Seine (FR)**

(43) Date de publication de la demande:
**23.07.80 Bulletin 80/15**

(72) Inventeur: **Novel, Pierre, 13 rue Jean Giono, F-42000 Saint Etienne (Loire) (FR)**

(45) Mention de la délivrance du brevet:
**25.01.84 Bulletin 84/4**

(74) Mandataire: **Perrier, Jean-Pierre et al, Cabinet GERMAIN & MAUREAU Le Britannia 20, Boulevard E. Déruelle, F-69003 Lyon (FR)**

(84) Etats contractants désignés:
**AT BE DE GB IT SE**

(56) Documents cités:
**FR - A - 1 176 665**
**FR - A - 1 382 034**
**US - A - 2 879 321**
**US - A - 2 907 814**

ACTORUM AG

Manchon d'ancrage pour conducteur électrique nu et organe de déformation pour assurer sa liaison par étirage avec un conducteur électrique nu

De tels manchons sont utilisés pour assurer l'ancrage d'un câble électrique nu sur un support et son raccordement avec un câble de dérivation. De façon connue, ils comprennent un élément de liaison qui, en métal conducteur de l'électricité et relativement ductile, est serti ou étiré sur l'extrémité du câble. Dans les dispositifs actuels, l'élément de liaison est prolongé, en-deçà de sa zone de liaison avec le câble, par une partie tubulaire sertie en usine sur un axe longitudinal solidaire d'une chape d'ancrage, tandis que la plage de raccordement du câble de dérivation est fixée par soudure sur le corps de l'élément de liaison. Ce mode de fabrication nécessite des reprises et des contrôles et s'avère donc onéreux.

En outre, ce type de manchon présente un autre inconvénient provenant de l'impossibilité de vérifier avec des moyens simples la pénétration de l'extrémité du câble dans l'alésage borgne ménagé dans l'élément de liaison déformable. En conséquence, lorsque le manchon est rendu solidaire d'un câble, il est impossible de vérifier de combien de câble pénètre dans le manchon et si la liaison ainsi obtenue présente la résistance recherchée.

L'état de la technique le plus pertinent est le Brevet US-A-2879321 montrant un manchon d'ancrage comportant un élément de liaison tubulaire traversé par le conducteur et dont l'une des extrémités est liée par coincement au corps d'accrochage, tandis que sa partie dépassant de ce corps est liée au conducteur par déformation mécanique au moyen d'un organe de déformation indépendant.

L'un des objets de la présente invention est de fournir un manchon qui soit de construction simple et peu onéreuse et permette à tout moment de vérifier la longueur de câble liée au manchon, donc la résistance de la liaison obtenue.

Lorsque la liaison du conducteur avec l'élément de liaison est assuré par étirage cette opération est réalisée, comme indiqué dans FR-B-1382034 au moyen d'une filière composée de deux parties qui sont appliquées et déplacées sur la partie tubulaire par les mors d'une manchonneuse. La filiére, qui est conçue pour assurer de nombreux étirages, doit présenter des caractéristiques stables, tant en géométrie qu'en état de surface. De se fait, elle est réalisée dans des matériaux nobles, soumis à des traitements améliorant leur dureté et leur résistance et nécessitant un usinage par rectification. On conçoit aisément que les filières de ce type soient onéreuses.

Par ailleurs, les dimensions de la filière sont déterminées en fonction des caractéristiques diamétrales de l'élément tubulaire de liaison et du conducteur sur lequel celui-ci doit être serti. Le monteur dispose ainsi de plusieurs filières dont les dimensions diamétrales sont différentes parfois de moins d'un millimètre, ce qui rend aisées les confusions. Il peut ainsi arriver que le monteur utilise une filière de diamètre supérieur à celle correspondant au travail à réaliser, avec pour conséquence la formation d'un manchon étiré ayant un diamètre supérieur à celui prévu et exerçant ainsi sur le conducteur une contrainte inférieure à celle calculée. Cela est d'autant plus grave que rien ne permet de supposer cette erreur et que les différences de diamètres sont telles que, même par une observation attentive, il est impossible de la vérifier, à moins d'avoir recours à des appareils de mesure, ce qui est peu fréquent. Ainsi, le ou les conducteurs peuvent, sous des contraintes exceptionnelles, échapper du manchon et tomber au sol.

Le coût élevé des filières et les incertitudes dues à leur utilisation limitent l'application de ce mode de liaison par des manchons étirables, alors que ce type de liaison est bien plus efficace et plus rapide que la liaison obtenue avec des manchons rétreints ou vissés.

Un autre objet de l'invention est de faciliter la pose de ces manchons étirables en supprimant tous risques de confusion et en améliorant la fiabilité de ce mode de liaison.

Les buts de l'invention sont atteints par les caractéristiques indiquées dans la partie caractérisante de la revendication 1.

Grâce à cet agencement, l'organe de déformation est parfaitement adapté à l'élément de liaison et tous les risques d'erreur d'identification sont supprimés au même titre que les risques dûs à un mauvais serrage de cet élément sur le conducteur. De plus, l'organe n'étant prévu que pour un seul usage, il peut être réalisé dans un matériau et par des procédés de fabrication moins onéreux que lorsqu'il est conçu pour une utilisation répétée.

L'extrémité libre du conducteur, dépassant de l'élément de liaison indique immédiatement que les conditions optimales de liaison du conducteur par rapport au manchon ont été respectées.

L'invention vise également un organe de déformation pour assurer la liaison par étirage du manchon avec un conducteur et, notamment, avec un conducteur bi-métallique composé d'une âme porteuse, en métal résistant mécaniquement, entourée par des brins en métal conducteur de l'électricité.

Actuellement, la contrainte radiale exercé par la filière sur l'élément de liaison du manchon est insuffisante pour assurer à la fois la liaison de l'âme et de l'enveloppe du conducteur. De ce fait, il est nécessaire, comme dans le Brevet US 2879321 de dénuder localement l'âme porteuse de manière à faire disparaitre sur une partie de son extrémité les torons de l'enveloppe conductrice. Cette opération est très mal commode, nécessite un doigté et oblige à fixer l'extrémité des torons sectionnés pour faciliter l'engagement de l'extrémité du conducteur dans l'élément de liaison du manchon. De plus, l'élément de liaison doit comporter un alésage interne étagé, ce qui augmente la longueur sur laquelle est effectuée la déformation mécanique assurant la liaison.

Un autre objet de l'invention est de fournir un organe permettant d'assurer la liaison de l'élément tubulaire du manchon avec un conducteur ayant une âme porteuse et une enveloppe conductrice en une seule opération et sans qu'il soit nécessaire de dénuder l'âme porteuse du conducteur.

A cet effet, dans cet organe, l'angle formé entre une génératrice de cône de la filière et son axe longitudinal est de l'ordre de 3°.

Grâce à cela, les contraintes radiales exercées par la filière sur l'élément tubulaire sont supérieures à celles obtenues avec les filières traditionnelles. Il en résulte que l'enveloppe extérieure du conducteur est soumise à des contraintes importantes lui permettant d'assurer elle-même le maintien de l'âme de ce conducteur.

L'invention sera mieux comprise à l'aide de la description qui suit en référence au dessin schématique annexé représentant à titre d'exemple non limitatif deux formes d'exécution du manchon d'ancrage selon l'invention.

Fig. 1 est une vue de côté en coupe longitudinale du manchon d'ancrage;

Fig. 2 est une vue similaire à la fig. 1, mais montrant une variante de réalisation de ce manchon;

Fig. 3 est une vue de côté en coupe longitudinale montrant le manchon au moment où son élément de liaison est rendu solidaire du conducteur par étirage au moyen d'une filière;

Fig. 4 est une vue de côté en coupe de la filière;

Fig. 5 est une vue de côté en coupe longitudinale montrant un manchon d'ancrage muni d'une gorge de maintien pour une filière imperdable mais jetable;

Fig. 6 est une vue en coupe longitudinale montrant une autre forme d'exécution d'un manchon d'ancrage dans laquelle le corps d'accrochage constitue filière;

Fig. 7 est une vue de côté montrant à échelle agrandie l'un des éléments d'une forme d'exécution de la filière utilisée dans la forme d'exécution de fig. 5;

Fig. 8 est une vue en perspective montrant la filière obtenue par assemblage de deux éléments identiques à ceux représentés fig. 7.

Le manchon selon l'invention est composé de façon connue de deux éléments: un corps d'accrochage 2 et un élément de liaison 3. Ce dernier est tubulaire sur toute sa longueur, c'est-à-dire est traversé en totalité par un alésage interne 4 de dimension légèrement supérieure à celle du conducteur 5 qui doit le traverser. A son extrémité postérieure, l'élément 3 affecte la forme d'une trompe tronconique 6, de faible conicité. Cette trompe diverge vers l'extrémité postérieure de l'élément 3 et comporte, à son extrémité, un collet radial 7. L'élément de liaison 3 est réalisé, de façon connue, dans un alliage métallique conducteur de l'électricité présentant une certaine ductilité lui permettant d'être déformé mécaniquement pour enserrer le câble 5. Cette déformation est effectuée, soit par des mâchoires de serrage, soit au moyen d'une filière entraînant une réduction de son diamètre extérieur et un allongement de sa partie en contact avec le câble.

Le corps d'accrochage 2 possède localement un alésage tronconique 10 ayant les mêmes caractéristiques que la trompe 6 de l'élément 3. Ce corps, réalisé dans un alliage métallique conducteur de l'électricité, mais présentant également une bonne résistance mécanique tout en étant beaucoup moins ductile que l'élément de liaison 3, forme un ensemble monolithique avec la chape d'accrochage 12 et au moins une plage de raccordement 13.

Les deux parties du manchon d'ancrage sont assemblées en usine par emmanchement à la presse de la trompe 6 dans l'alésage 10 du corps d'accrochage 2.

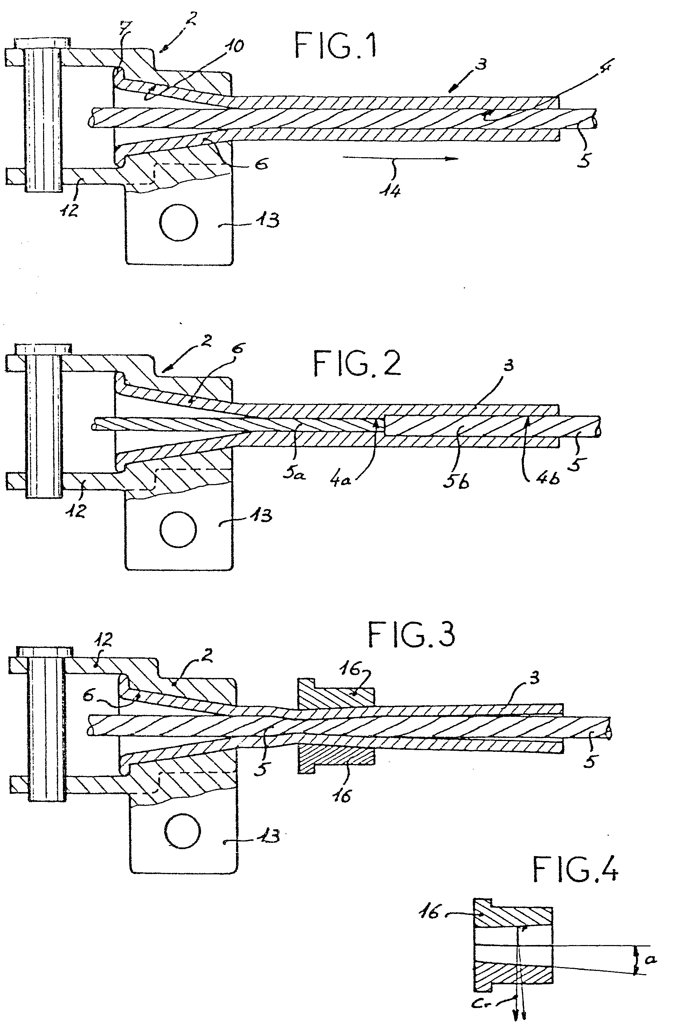

Cette liaison par coincement, qui fait appel à de grandes surfaces de contact, est très favorable à la transmission du courant entre l'élément de liaison 3 et le corps d'accrochage 2. La résistance mécanique à la traction de la liaison dans le sens de la flèche 14 de fig. 1 est complétée par appui du collet 7 sur la face diamétrale 15 du corps 2.

Selon l'invention et comme le montre la fig. 1, l'extrémité du conducteur 5, dont il faut assurer l'ancrage, est introduite dans l'alésage 4 de l'élément 3, de manière que son extrémité libre dépasse de l'extrémité 6 de la trompe. Cela permet, par la suite, d'identifier instantanément que la liaison a été correctement effectuée.

De façon connue, cette liaison peut être effectuée, soit par sertissage au moyen de mors donnant à l'élément une section transversale circulaire ou hexagonale, soit par étirage. Dans ce cas, et comme montré à la fig. 3, la partie tubulaire de l'élément de liaison 3 est serrée sur le conducteur 5 au moyen d'une filière conique 16 en deux parties.

Lorsque ce manchon d'ancrage est destiné à être utilisé avec un conducteur composé d'une âme porteuse 5a en acier et d'une enveloppe extérieure 5b composée de plusieurs torons en alliage conducteur de l'électricité, la partie tubulaire de son élément de liaison peut comporter un alésage intérieur étagé, comme montré à la fig. 2. Dans ce cas, l'alésage 4a débouchant de la trompe 6 a un diamètre plus petit que celui 4b débouchant à l'extrémité antérieure de la partie tubulaire de l'élément 3. Il est à noter que, même dans ces conditions, il est avantageux de faire dépasser l'extrémité de l'âme 5a de la trompe 6 afin de montrer que le câble porteur a été correctement mis en place dans l'élément de liaison 3.

Toutefois, et pour éviter d'avoir à dénuder l'âme porteuse 5a sur une partie de sa longueur, il est préférable d'utiliser un élément de liaison comportant un alésage de même diamètre sur toute sa longueur, comme montré à la fig. 1. Dans ce cas, la déformation de l'élément de liaison 3 sur le câble 5 est assurée par une filière conique 16, dont l'angle a, formé entre l'une de ses génératrices et son axe longitudinal, n'a qu'une valeur très faible de l'ordre de 3°. Grâce à cela, et comme montré à la fig. 4, la contrainte de compression radiale CR exercée par la filière sur l'élément est très élevée, et supérieur à celle engendrée par les filières habituelles. De ce fait, l'enveloppe 5b du conducteur est soumise à une contrainte importante lui permettant de maintenir elle-même l'âme 5a dans l'élément 3, sans qu'il soit nécessaire de soumettre celle-ci à toute autre opération de préparation et de serrage.

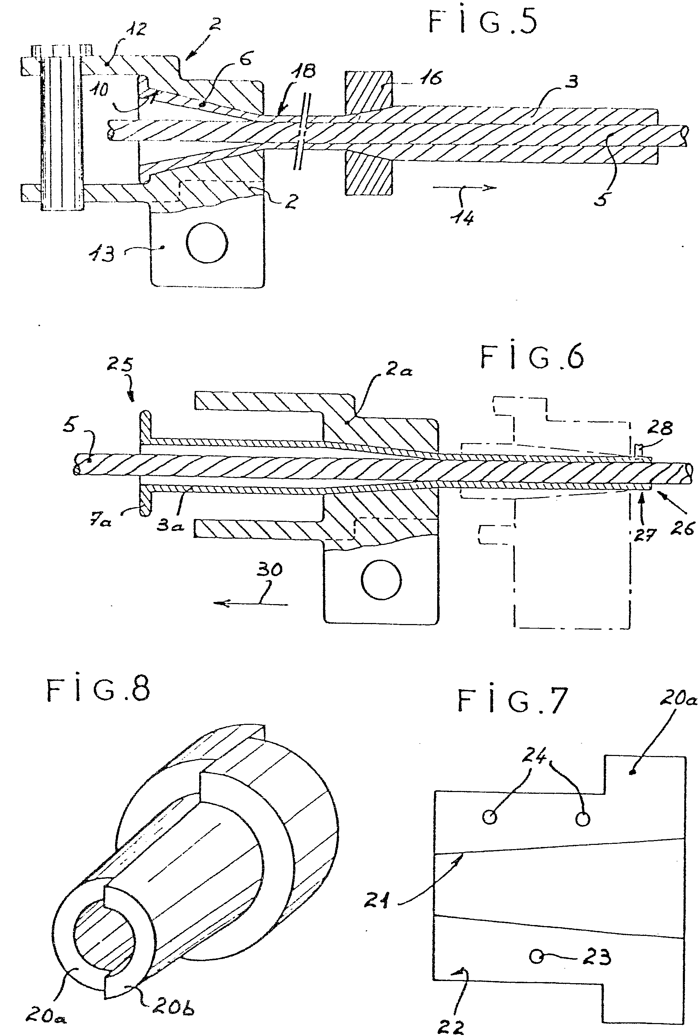

Le manchon d'ancrage représenté à la fig. 5 se différencie des précédents par le fait qu'il comporte, sur son élément tubulaire de liaison 3, une gorge 18 dans laquelle est montée une filière 16.

Dans cette forme d'exécution, la filière 16 est réalisée en une seule pièce; elle est montée sur la gorge 18 avant que la trompe 6 ait été réalisée par déformation de l'extrémité postérieure de la partie tubulaire 3.

Cette filière 16, qui est mise en place au moment de la fabrication du manchon d'ancrage, forme un ensemble monolithique avec ce dernier, car elle est calée en translation par la trompe 6 et par le bord correspondant de la gorge. Grâce à cela, lorsque le monteur désire ancrer un conducteur 5, il lui suffit, après avoir introduit l'extrémité de ce conducteur dans le manchon d'ancrage, de venir enserrer la filière 16 au moyen des mors de la manchonneuse et de communiquer à cette filière un déplacement dans le sens de la flèche 14 de fig. 5. A la fin de ce déplacement qui assure l'étirage de la partie tubulaire 3 et son serrage sur le conducteur, la filière 16 échappe de cette partie 3 et reste maintenue par le câble 5 sur lequel elle repose.

Cette filière 16, qui ne peut être utilisé que pour effectuer l'étirage d'un seul manchon d'ancrage, peut être réalisée par des moyens de fabrication moins onéreux que ceux habituels et, par exemple, peut être obtenue par décolletage, par emboutissage d'une tôle ou par précifusion.

Dans une variante de réalisation montrée fig. 7 et 8, la filière est composée de deux éléments identiques 20a et 20b. Chacun de ces éléments, de forme semi-cylindrique, et comportant dans sa partie centrale un demi-cône 21, est muni, en saillie de sa face diamétrale 22, d'un tenon 23. Chaque élément comporte, sur son bord opposé à celui muni du tenon 23, deux alésages 24 débouchant de sa face diamétrale. Ces alésages sont décalés longitudinalement par rapport au tenon 23 afin que, lors de l'assemblage de deux éléments identiques, et comme montré à la fig. 8, les deux éléments soient légèrement décalés indiquant ainsi que la filière n'a jamais été utilisée. Le tenon 23 de chacun des deux éléments pénètre avec force dans l'alésage 24 correspondant pour assurer une liaison par emboîtement de ces deux éléments.

Lorsqu'une telle filière est montée sur un manchon d'ancrage, comme représenté à la fig. 5, elle est solidaire du manchon et ne peut pas en être séparée jusqu'à ce que ce dernier soit mis en place sur un câble.

Dès que la filière est soumise par les mors d'une manchonneuse à l'effort longitudinal assurant l'étirage du manchon, les tenons 23, dont la section est déterminée pour céder sous l'effort, se rompent et permettent aux deux éléments de la filière de venir dans leur position normale de fonctionnement. A la fin de l'étirage, la seule ouverture des mors de la manchonneuse libère les deux éléments de la filière qui peuvent ainsi être retirés et jetés.

Cette filière irrécupérable permet d'obtenir, à moindre coût d'excellents résultats et suprime tous risques d'erreurs et manipulations pour retirer la filière du manchon et du conducteur.

Dans la forme d'exécution représentée à la fig. 6, l'organe apte à assurer l'étirage du manchon est constitué par le corps d'accrochage 2a dont l'alésage tronconique 10 possède alors une conicité similaire à celle d'une filière. Son élément de liaison 3a comporte, dès sa fabrication et avant son étirage une partie tubulaire cylindrique de grand diamètre s'étendant depuis son extrémité antérieure 25 jusqu'à proximité de son extrémité postérieure 26 constituée par une partie 27 de plus petit diamètre raccordée à la précédente par une partie tronconique. Après mise en place du corps d'accrochage 2a sur la partie de petit diamètre 27 de l'élément de liaison, le premier est rendu solidaire de ce dernier par des moyens d'arrêt en translation constitués, dans cette forme d'exécution, par un doigt radial 28. Ainsi, comme montré en traits mixtes fig. 6, le corps d'accrochage forme un ensemble monolithique avec le manchon et ne peut pas être perdu durant les manipulations et jusqu'à sa pose sur le conducteur 5. Pour assurer l'étirage de l'élément de liaison sur le conducteur 5, il suffit de saisir le corps d'accrochage 2a au moyen d'une manchonneuse dont les mors sont appropriés et de déplacer ce corps dans le sens de la flèche 30 de fig. 6 avec un effort bien supérieur à la tension de montage du conducteur. A la fin de ce déplacement, le corps d'accrochage 2a vient en butée contre le collet 7a ménagé à l'extrémité antérieure 25 de l'élément de liaison.

Cette solution évite d'avoir recours à une filière spéciale et réduit le coût du manchon qui, par ailleurs, assure une aussi bonne liaison électrique que celui de fig. 1.

Quelle que soit sa forme d'exécution, le manchon selon l'invention, est simple et peu onéreux, permet d'obtenir un excellent contact électrique et de supprimer tous risques d'erreur portant sur la longueur de conducteur serré ou sur la contrainte de serrage. De plus, avec un organe d'étirage monté sur lui, au moment de sa fabrication, sa mise en place est très aisée et permet d'obtenir encore une meilleure liaison avec le conducteur, tout en supprimant l'opération habituelle de nettoyage de la filière.

Il est à noter que, la filière ne servant qu'une seule fois, elle peut être prégraissée avant son montage sur le manchon, ce qui supprime encore l'opération de graissage du manchon.

Enfin, les différentes filières ou organes aptes à assurer l'étirage du manchon peuvent être réalisés dans des matériaux et par des procédés de fabrication qui, permettant d'obtenir la dureté superficielle et l'état de surface nécessaires à l'opération d'étirage, n'entrainent qu'une augmentation très faible de coût de manchon proprement dit, largement compensée par le gain provenant de la facilité et de la faible durée du montage.

**Revendications**

1. Manchon d'ancrage pour conducteur électrique nu composé des caractéristiques suivantes:
   1. un corps d'accrochage (2) réalisé en un alliage métallique à haute résistance mécanique, formant un ensemble monolithique avec
      1.1. une chape d'accrochage (12) mécanique,
      1.2. une plage de raccordement électrique (13) et
      1.3. un alésage (4) tronconique,
   2. au moins un élément de liaison (3) en métal conducteur de l'électricité et de forme tubulaire, dans lequel est introduit le conducteur (5), présentant à son extrémité postérieure une trompe tronconique (6) complémentaire à la partie tronconique de l'alésage et divergeant vers l'extrémité postérieure de l'élément de liaison (3),
   3. la liaison s'effectuant
      3.1. d'une part, par coinçage de la trompe tronconique (6) de l'élément de liaison (3) dans la partie tronconique de l'alésage (4) pour y transmettre le courant,
      3.2. d'autre part, par fixation de l'élément de liaison (3) au conducteur (5) par déformation mécanique de la partie de cet élément (3) dépassant du corps d'accrochage sur la partie correspondante du conducteur (5) par un organe de déformation.

   caractérisé par les caractéristiques suivantes:
   4. le conducteur (5) traverse en totalité l'élément de liaison (3), dépassant ainsi l'alésage tronconique du corps d'accrochage (2),
   5. l'organe de déformation (16:2) est disposé de manière imperdable lors de la construction préalable sur une partie de plus faible diamètre de l'élément de liaison (3),
   6. la déformation mécanique est effectuée par la contrainte de serrage engendrée pendant l'ancrage par déplacement de l'organe de déformation (16:2) sur une partie de plus fort diamètre de l'élément de liaison,
   7. la liaison électrique et mécanique du conducteur (5) avec l'élément de liaison (3) est assurée par cette unique déformation.

2. Manchon selon la revendication 1, caractérisé en ce que l'organe de déformation est constitué par le corps d'accrochage (2) dont l'alésage tronconique a la même conicité qu'une filière.

3. Manchon selon la revendication 1, caractérisé en ce que l'organe de déformation est constitué par une filière irrécupérable (16) composée de deux éléments (20a–20b) sensiblement semi-cylindriques dont la liaison temporaire sur l'élément de liaison (3) est assurée par embroîtement de tenons (23) saillant des faces diamétrales en vis-à-vis et pénétrant de force dans les alésages (24) débouchant des mêmes faces.

4. Manchon selon la revendication 3, caractérisé en ce que les tenons (23) et alésages complémentaires (24) sont répartis avec décalage sur chacun des deux éléments (20a–20b) de la filière afin que, lors de leur assemblage, ces derniers soient décalés longitudinalement, tandis que les tenons (23) ont une section déterminée pour se rompre dès le début de l'étirage.

5. Organe d'étirage pour assurer la liaison de l'élément de liaison du manchon, selon l'une quelconque des revendications 1 à 4, sur un conducteur (5) composé d'une âme porteuse (5a) et d'une enveloppe (5b) formée par des brins en métal conducteur de l'électricité, du type mettant en œuvre une filière conique (16), caractérisé en ce que l'angle (a) formé entre une génératrice du cône de la filière et son axe longitudinal est de l'ordre de 3°.

**Claims**

1. Anchoring coupling for a bare electric conductor having the following characteristics:
   1. a connector body (2) formed of a metallic alloy having high mechanical resistance, forming a monolithic assembly with
      1.1 a mechanical connector cap (12),
      1.2 an electrical connecting tag (13),
      1.3 a truncated conical bore (4),
   2. at least one electrically conductive metal connecting element (3) of tubular form, into which is introduced a conductor (5) having at its posterior end a truncated conical bell (6) complementary to the truncated conical part of the bore and diverging towards the posterior end of the connecting element (3),
   3. the connection being effected,
      3.1 on the one hand, by wedging the truncated conical bell (6) of the connecting element (3) in the truncated conical part of the bore (4) in order to permit transmission of current,
      3.2 on the other hand, by securing the connecting element (3) to the conductor (5) by mechanical deformation of the part of this element (3) extending from the connector body onto the corresponding part of the conductor (5) by a deforming device,

   characterised by the following characteristics:
   4. the conductor (5) passes wholly through the connecting element (3) and projects from the truncated conical bore of the connector body (2),
   5. the deforming device (16:2) is disposed such that it cannot be lost from the previous construction on a part of smallest diameter of the connecting element (3),
   6. the mechanical deformation is effected by the tightening force engendered during anchoring by displacement of the deformation device (16:2) on a part of largest diameter of the connecting element,
   7. the electrical and mechanical connection of the conductor (5) with the connecting element is assured by this single deformation.

2. Coupling according to claim 1, characterised in that the deformation device is constituted by the connector body (2) whereof the truncated conical bore has the same conicity as a die.

3. Coupling according to claim 1, characterised in that the deformation device is constituted by an irreparable die (16) comprising two substantially semi-circular elements (20a–20b) whereof their temporary mounting on the connecting element (3) is assured by engagement of lugs (23) projecting form opposed diametral faces and forcibly engaging in bores (24) opening at the same faces.

4. Coupling according to claim 3, characterised in that the lugs (23) and complementary bores (24) are staggered on each of the two elements (20a–20b) of the die so that, when assembled, the latter are staggered longitudinally while the lugs (23) have a predetermined section adapted to break at the start of drawing.

5. Drawing device for assuring the connection of the connecting element of the coupling, according to any one of claims 1 to 4, on a conductor (5) comprising a carrier core (5a) and a sheath (5b) formed by electrically conductive metal strands, of the type using a conical die, characterised in that the angle (a) subtended between a generatrice of the cone of the die and its longitudinal axis is of the order of 3°.

## Patentansprüche

1. Verankerungsmuffe für blanke elektrische Leiter, die sich aus folgenden Merkmalen zusammensetzt:

1. einem Verankerungskörper (2) aus einer metallischen Legierung hoher mechanischer Festigkeit, der eine monolithische Einheit bildet mit

1.1 einem mechanischen Verankerungsbügel (12)

1.2 einer elektrischen Verbindungsfläche (13) und

1.3 einer kegelstumpfförmigen Bohrung (4)

2. wenigstens einem Verbindungselement (3) aus elektrisch leitendem Metall in röhrenförmiger Form, in das der Leiter (5) eingeführt wird und das an seinem hinteren Ende eine kegelstumpfförmige Erweiterung (6) aufweist, die zum kegelstumpfförmigen Abschnitt der Bohrung komplementär ist und sich gegen das hintere Ende des Verbindungselementes (3) erweitert.

3. die Verbindung vollzieht sich

3.1 einerseits durch Verkeilung der kegelstumpfförmigen Erweiterung (6) des Verbindungselementes (3) im kegelstumpfförmigen Abschnitt der Bohrung (4), um dort den Strom zu übertragen,

3.2 anderseits durch Fixierung des Verbindungselementes (3) mit dem Leiter (5) durch mechanische Verformung des aus dem Verankerungskörper überstehenden Abschnittes dieses Elementes (3) über dem korrespondierenden Abschnitt des Leiters (5) mittels eines Verformungsorgans,

gekennzeichnet durch folgende Merkmale:

4. der Leiter (5) durchsetzt zur Gänze das Verbindungselement (3), wobei er auch durch die kegelstumpfförmige Bohrung des Verankerungskörpers (2) hindurchgeht,

5. das Verformungsorgan (16; 2) wird vor dem Zusammenbau unverlierbar auf einem einen geringen Durchmesser aufweisenden Abschnitt des Verbindungselementes (3) angeordnet,

6. die mechanische Verformung wird durch den Zwang der Pressung während der Verankerung beim Verschieben des Verformungsorganes (16; 2) über einen Abschnitt des Verbindungselementes herbeigeführt, der einen geraden Durchmesser aufweist,

7. die elektrische und mechanische Verbindung des Leiters (5) mit dem Verbindungselement wird durch diese einzige Verformung sichergestellt,

2. Muffe nach Anspruch 1, dadurch gekennzeichnet, dass das Verformungsorgan vom Verankerungskörper (2) gebildet ist, dessen kegelstumpfförmige Bohrung dieselbe Konizität aufweist wie eine Ziehkluppe.

3. Muffe nach Anspruch 1, dadurch gekennzeichnet, dass das Verformungsorgan von einer nicht wieder verwendbaren Ziehkluppe gebildet ist, die aus zwei im wesentlichen hydraulischen Elementen (20a, 20b) zusammengesetzt ist, deren temporäre Verbindung mit dem Verbindungselement (3) durch das Eingreifen von Zapfen (23) sichergestellt ist, die aus diametral gegenüberliegenden Flächen vorspringen und kraftschlüssig in Bohrungen (24) eindringen, die in denselben Flächen münden.

4. Muffe nach Anspruch 3, dadurch gekennzeichnet, dass die Zapfen (23) und die komplementären Bohrungen (24) auf jedem der beiden Elemente (20a, 20b) der Ziehkluppe gegeneinander versetzt verteilt sind, damit, nach dem Zusammenbau, letztere (20a, 20b) in der Längsrichtung gegeneinander versetzt sind, während die Zapfen (23) einen vorbestimmten Querschnitt haben, damit sie am Beginn des Ziehens abbrechen.

5. Ziehorgan zur Sicherung der Verbindung des Verbindungselementes der Muffe nach einem der Ansprüche 1 bis 4 auf einem Leiter (5), der aus einer Seele (5a) und einer von Litzen aus einem elektrischen leitenden Metall gebildeten Umhüllung (5b) besteht und von jener Art ist, bei der eine konische Ziehkluppe in Betrieb gesetzt wird, dadurch gekennzeichnet, dass der Winkel (α) zwischen einer Erzeugenden des Konus der Ziehkluppe und ihrer Längsachse in der Grössenordnung von 3° ist.

# FIG.1

# FIG.2

# FIG.3

# FIG.4

FIG.5

FIG.6

FIG.8

FIG.7